# EUROPÄISCHE PATENTSCHRIFT

(11) **EP 3 463 616 B1**
(45) Veröffentlichungstag und Bekanntmachung des Hinweises auf die Patenterteilung: **23.02.2022**
(21) Anmeldenummer: 17721703.1
(22) Anmeldetag: 08.05.2017
(51) Int. Cl.: B01D 46/10, B01D 46/52

(54) **FILTERELEMENT EINER FILTERVORRICHTUNG UND FILTERVORRICHTUNG**
FILTER ELEMENT OF A FILTER DEVICE AND FILTER DEVICE
ÉLÉMENT FILTRANT D'UN DISPOSITIF DE FILTRATION ET DISPOSITIF DE FILTRATION

(30) Priorität: 02.06.2016 DE 102016006607
(43) Veröffentlichungstag der Anmeldung: 10.04.2019
(73) Patentinhaber: MANN+HUMMEL GmbH, 71636 Ludwigsburg (DE)
(72) Erfinder: DIRNBERGER, Timo, 71672 Marbach (DE); SCHMID, Daniel, 74343 Sachsenheim (DE); JOOS, Bernd, 73547 Lorch (DE)
(74) Vertreter: Mann + Hummel Intellectual Property
(86) Internationale Anmeldenummer: PCT/EP2017/060872
(87) Internationale Veröffentlichungsnummer: WO 2017/207218

(56) Entgegenhaltungen:
- WO-A1-2009/150165
- WO-A2-2013/139901
- JP-U- H0 166 458

## Beschreibung

### Technisches Gebiet

Die Erfindung betrifft ein Filterelement für eine Filtervorrichtung für Fluid, insbesondere Luft, Gas, Kraftstoff, Öl, Wasser, Harnstoffwasserlösung oder dergleichen, insbesondere einer Brennkraftmaschine, insbesondere eines Kraftfahrzeugs, welches austauschbar in einem Filtergehäuse zwischen wenigstens einem Einlass und wenigstens einem Auslass für Fluid angeordnet werden kann, wobei das Filterelement aufweist wenigstens einen Filterbalg mit wenigstens einem Filtermedium und wenigstens einer Dichtung, welche bezüglich einer Achse des Filterelements umfangsmäßig an einem stirnseitigen Rand des Filterbalgs angeordnet ist, wobei die wenigstens eine Dichtung einen umfangsmäßigen Befestigungsbereich mit einem sich von radial außen nach radial innen erstreckenden radialen Befestigungsabschnitt und einem sich wenigstens mit einer Richtungskomponente parallel zur Achse erstreckenden axialen Befestigungsabschnitt und einen umfangsmäßigen Dichtungsbereich aufweist, wobei der Befestigungsbereich mit dem radialen Befestigungsabschnitt und dem axialen Befestigungsabschnitt den Rand des Filterbalgs umgreift, wobei eine dem Filterbalg abgewandte Rückseite des radialen Befestigungsabschnitts eine Haltefläche für einen bezüglich der Achse radial inneren gehäuseseitigen Andrückabschnitt bildet, wobei eine dem Filterbalg abgewandte Rückseite des axialen Befestigungsabschnitts eine radial innere Begrenzung einer wenigstens teilweise umfangsmäßigen Nut im Dichtungsbereich zur Aufnahme eines radial äußeren gehäuseseitigen Andrückabschnitts bildet, wobei die Nut auf der dem axialen Befestigungsabschnitt von radial innen nach radial außen betrachtet gegenüberliegenden radial äußeren Umfangsseite von einem umfangsmäßigen Dichtungsvorsprung begrenzt ist, welcher den axialen Befestigungsabschnitt in axialer Richtung betrachtet überragt, wobei auf der der Nut axial gegenüberliegenden Außenseite des Dichtungsbereichs eine bezüglich der Achse wenigstens in axialer Richtung wirkende umfangsmäßige Dichtungsfläche angeordnet ist, welche sich in einem größeren axialen Abstand zu der Stirnseite des Filterbalgs befindet als die Haltefläche des radialen Befestigungsabschnitts.

Außerdem betrifft die Erfindung eine Filtervorrichtung mit einem Filtergehäuse, in dem wenigstens ein Filterelement angeordnet ist.

Die Filtervorrichtung weist ein Filtergehäuse auf mit wenigstens einem Einlass für zu filtrierendes Fluid und wenigstens einem Auslass für filtriertes Fluid, wobei in dem Filtergehäuse wenigstens ein Filterelement austauschbar so angeordnet ist oder werden kann, dass es den wenigstens einen Einlass von dem wenigstens einen Auslass trennt, wobei das Filtergehäuse wenigstens ein erstes Gehäuseteil und ein zweites Gehäuseteil aufweist, welche zum Öffnen des Filtergehäuses wenigstens teilweise voneinander trennbar sind, und das wenigstens eine erste Gehäuseteil und das wenigstens eine zweite Gehäuseteil eine bezüglich einer Achse des Filtergehäuses umfangsmäßig verlaufende Dichtungskammer zur Aufnahme wenigstens einer Dichtung wenigstens eines Filterelements begrenzen, wobei das wenigstens eine zweite Gehäuseteil wenigstens eine abschnittsweise parallel zur Achse gerichtete wenigstens teilumfängliche Dichtfläche zur dichtenden Anlage der wenigstens einen Dichtung und das wenigstens eine erste Gehäuseteil einen der wenigstens einen Dichtfläche bezüglich der Achse axial gegenüberliegenden wenigstens teilumfänglichen radial äußeren Andrückabschnitt mit einer wenigstens teilumfänglichen radial äußeren Andrückfläche zum Andrücken der wenigstens einen Dichtung gegen die wenigstens eine Dichtfläche aufweist, das wenigstens eine zweite Gehäuseteil wenigstens einen bezüglich der Achse wenigstens teilumfänglichen radial inneren Andrückabschnitt mit einer wenigstens teilumfänglichen radial inneren Andrückfläche radial innerhalb der wenigstens einen Dichtfläche zum Drücken des wenigstens einen Filterelements in axialer Richtung und wobei das wenigstens eine zweite Gehäuseteil bezüglich der Achse radial außerhalb der wenigstens einen Dichtfläche und des radial äußeren Andrückabschnitts eine die Dichtungskammer radial außen wenigstens teilweise begrenzende Umfangswand aufweist.

### Stand der Technik

Aus der WO 2013139901 A2 ist ein Filtereinsatzteil für eine Filtereinrichtung bekannt, welche vorzugsweise zur Gasfiltration, zum Beispiel zur Filtration der Ansaugluft für eine Brennkraftmaschine eingesetzt wird. Das Filtereinsatzteil umfasst ein Filterelement sowie ein am Filterelement angeordnetes, vorzugsweise umlaufendes Dichtungsteil. Das Filtereinsatzteil wird in ein Filtergehäuse der Filtereinrichtung eingesetzt, wobei das Dichtungsteil die Roh- von der Reinseite des Filterelementes separiert und im montierten Zustand an einer Wandung des Filtergehäuses dichtend anliegt. Es ist beispielsweise möglich, dass ein Dichtabschnitt des Dichtungsteils in einem Aufnahmekanal des Gehäuses aufgenommen ist und von einem weiteren Gehäuseteil, beispielsweise einem Deckel, mit einer Kraft beaufschlagt wird. Die Beaufschlagungsrichtung ist hierbei entweder parallel zur Durchströmungsrichtung des Filterelementes, also axial, oder quer zur Durchströmungsrichtung, also radial.

Der Erfindung liegt die Aufgabe zugrunde, ein Filterelement und eine Filtervorrichtung der eingangs genannten Art zu gestalten, bei denen die wenigstens eine Dichtung sicher, platzsparend und stabil insbesondere in einer Dichtungskammer des Filtergehäuses angeordnet werden kann.

### Offenbarung der Erfindung

Diese Aufgabe wird erfindungsgemäß durch ein Filterelement nach Anspruch 1 gelöst. Ein axialer Abstand zwischen einem Grund der Nut und der Dichtungsfläche ist größer als ein Abstand zwischen einem Übergang des Grundes der Nut zu dem axialen Befestigungsabschnitt und einem Übergang der Haltefläche zu dem Dichtungsbereich.

Erfindungsgemäß weist die wenigstens eine Dichtung zwischen der Dichtungsfläche und der Haltefläche eine Verjüngung auf, welche in einer entsprechenden gehäuseseitigen Lücke angeordnet werden kann. Beidseitig der Verjüngung kann die wenigstens eine Dichtung in eingebautem Zustand die entsprechende gehäuseseitige Lücke überragen. Auf diese Weise kann verhindert werden, dass im eingebauten Zustand die Dichtung aus einer entsprechenden gehäuseseitigen Dichtungskammer herausgezogen werden kann.

Vorteilhafterweise kann ein Verhältnis zwischen dem axialen Abstand zwischen dem Grund der Nut und der Dichtungsfläche einerseits und dem Abstand zwischen dem Übergang des Grundes der Nut zu dem axialen Befestigungsabschnitt und dem Übergang der Haltefläche zu dem Dichtungsbereich andererseits zwischen etwa 1 zu 0,5 und 1 zu 0,9, insbesondere etwa 1 zu 0,66, betragen.

Vorteilhafterweise kann ein axialer Abstand zwischen einem Grund der Nut und der Dichtungsfläche größer sein als ein axialer Abstand zwischen dem Grund der Nut und dem freien Rand des Dichtungsvorsprungs. Die axiale Ausdehnung des Dichtungsvorsprungs kann geringer sein als die axiale Ausdehnung des Dichtungsbereichs zwischen der Nut und der Dichtungsfläche. Auf diese Weise kann die wenigstens eine Dichtung insgesamt stabiler und kompakter ausgestaltet sein. Ein Raumbedarf der wenigstens einen Dichtung insbesondere in axialer Richtung kann so verringert werden.

In der Nut kann ein gehäuseseitiger Andrückabschnitt aufgenommen werden. So kann die wenigstens eine Dichtung auf dem gehäuseseitigen Andrückabschnitt gehalten werden. Die wenigstens eine Dichtung kann auf dem wenigstens einen radial äußeren Andrückabschnitt sicher aufgenommen werden. Ein Abrutschen der wenigstens einen Dichtung kann mithilfe der Nut vermieden werden.

Mit dem wenigstens einen radial inneren Andrückabschnitt kann verhindert werden, dass die wenigstens eine Dichtung aus einer mit dem Andrückabschnitt begrenzten Dichtungskammer herausgezogen werden kann. Auf diese Weise kann die wenigstens eine Dichtung auch bei einer Beaufschlagung des Filterelements, insbesondere eines Luftfilterelements, mit Flüssigkeit, insbesondere Wasser, oder bei Druckpulsationen insbesondere in der wenigstens einen Dichtungskammer gehalten werden. Durch gezielte Wahl der Proportionen der wenigstens einen Dichtung einerseits und der gehäuseseitigen Bauteile, insbesondere der gehäuseseitigen Andrückabschnitte, einer Umfangswand und einer Dichtungskammer, andererseits können eine Positionierung, eine Zentrierung und eine Halterung der Dichtung und/oder des Filterelements insbesondere beim Betrieb der Filtervorrichtung verbessert werden.

Der wenigstens eine radial innere Andrückabschnitt und der wenigstens eine radial äußere Andrückabschnitt können von gegenüberliegenden Seiten an der wenigstens einen Dichtung angreifen. Auf diese Weise kann die wenigstens eine Dichtung zwischen dem wenigstens einen radial inneren Andrückabschnitt und dem wenigstens einen radial äußeren Andrückabschnitt gehalten werden. Vorteilhafterweise kann sich die wenigstens eine Dichtung hinter dem wenigstens einen radial inneren Andrückabschnitt, insbesondere im Dichtungsbereich, im Querschnitt erweitern. Auf diese Weise kann ein durchrutschen verhindert werden.

Vorteilhafterweise kann gehäuseseitig wenigstens ein radial innerer Andrückabschnitt und/oder wenigstens ein radial äußerer Andrückabschnitt jeweils in Form einer Rippe realisiert sein. Rippen können einfach realisiert werden.

Vorteilhafterweise kann wenigstens ein radial innerer Andrückabschnitt und/oder wenigstens ein radial äußerer Andrückabschnitt wenigstens abschnittsweise bezüglich der Achse umfangsmäßig verlaufen. Auf diese Weise kann die wenigstens eine Dichtung umfangsmäßig insbesondere gleichmäßig gehalten und/oder angedrückt werden.

Vorteilhafterweise kann wenigstens ein radial äußerer Andrückabschnitt als Dichtrippe realisiert sein. Auf diese Weise kann mit ihm eine Dichtfunktion verbessert werden.

Vorteilhafterweise kann wenigstens ein radial innerer Andrückabschnitt als Halterippe realisiert sein. Auf diese Weise kann mit ihm eine Haltefunktion zum Halten der wenigstens einen Dichtung realisiert werden.

Vorteilhafterweise kann das wenigstens eine erste Gehäuseteil als Gehäusetopf ausgestaltet sein. In dem Gehäusetopf kann das wenigstens eine Filterelement angeordnet werden.

Vorteilhafterweise kann das wenigstens eine zweite Gehäuseteil als Gehäusehaube ausgestaltet sein. Mit der Gehäusehaube kann der Gehäusetopf einfach verschlossen werden.

Vorteilhafterweise können das wenigstens eine erste Gehäuseteil und das wenigstens eine zweite Gehäuseteil bezüglich der Achse in axialer Richtung miteinander verbunden und entsprechend getrennt werden. Auf diese Weise können die Gehäuseteile mit einer geraden Bewegung verbunden werden. Vorteilhafterweise kann das wenigstens eine Filterelement bezüglich der Achse in axialer Richtung in wenigstens eines der Gehäuseteile, insbesondere das wenigstens eine erste Gehäuseteil, bevorzugt den Gehäusetopf, eingesteckt und entsprechend entfernt werden.

Vorteilhafterweise können das wenigstens eine erste Gehäuseteil und das wenigstens eine zweite Gehäuseteil jeweils wenigstens einen Durchlass für Fluid, insbesondere einen Einlass beziehungsweise einen Auslass, aufweisen. Das wenigstens eine Filterelement kann zwischen den beiden Gehäuseteilen so angeordnet werden, dass der wenigstens eine Einlass von dem wenigstens einen Auslass getrennt ist.

Vorteilhafterweise kann wenigstens ein Teil der wenigstens einen Dichtung axial zur Achse betrachtet neben dem Filterbalg angeordnet sein. Auf diese Weise kann der von dem Filterelement insgesamt in axialer Richtung benötigte Bauraum verringert werden. So kann außerdem die wenigstens eine axial wirkende Dichtungsfläche in axialer Richtung betrachtet näher an einer entsprechenden Stirnseite des Filterbalgs angeordnet sein. Die Dichtungsebene kann insgesamt tiefer zum Filterbalg angeordnet werden. Dadurch kann mehr Filterfläche mit einem vergleichbaren benötigten Bauraum umgesetzt werden. Bei einem Filterbalg mit gefalteten Filtermedium können so größere Faltenhöhen realisiert werden. Zusätzlich oder alternativ kann ein Druckverlust reduziert werden, da für das wenigstens eine Filterelement ein geringerer Bauraum erforderlich ist.

Vorteilhafterweise kann ein Verhältnis zwischen dem axialen Abstand zwischen dem Grund der Nut und der Dichtungsfläche einerseits und einem axialen Abstand zwischen dem Grund der Nut und dem freien Rand des Dichtungsvorsprungs andererseits etwa zwischen 1 zu 0,1 und 1 zu 0,4, insbesondere etwa 1 zu 0,28, betragen. Auf diese Weise kann ein deutlicher axialer Größenunterschied zwischen dem Dichtungsvorsprung und dem Dichtungsabschnitt ermöglicht werden.

Vorteilhafterweise kann die wenigstens eine Dichtung geschäumt, insbesondere an und/oder auf den Filterbalg geschäumt, sein. Vorteilhafterweise kann die Dichtung frei schäumendes Material, insbesondere Polyurethan (PUR), aufweisen oder daraus bestehen. Vorteilhafterweise kann die wenigstens eine Dichtung wenigstens teilweise elastisch sein. Auf diese Weise können Toleranzen und/oder Vibrationen besser kompensiert werden.

Vorteilhafterweise kann das Filterelement, insbesondere die wenigstens eine Dichtung, einen bezüglich der Achse in axialer Richtung betrachtet eckigen, insbesondere rechteckigen, runden, ovalen oder andersartigen Umfang aufweisen. Wenn von "radialen Abständen" oder "Abständen von radial innen nach radial außen betrachtet" oder "Abständen von radial außen nach radial innen betrachtet" die Rede ist, bezieht sich dies um die entsprechenden Abstände in Richtung senkrecht auf die zueinander beabstandeten Linien oder Flächen von radial innen nach radial außen oder umgekehrt betrachtet. Im Fall, dass das Filterelement, insbesondere die Dichtung, einen runden Umfang aufweist, kann diese Richtung einem Radius bezüglich der Achse entsprechen, so dass die entsprechenden Abstände auch als "radiale Abstände" bezeichnet werden können.

Vorteilhafterweise können das Filterelement und die Filtervorrichtung zur Reinigung von Luft, Gas, Kraftstoff, Öl, Wasser, Harnstoffwasserlösung oder dergleichen verwendet werden. Das Filterelement und die Filtervorrichtung können in Verbindung mit einer Brennkraftmaschine eines Kraftfahrzeugs eingesetzt werden. Die Erfindung ist jedoch nicht beschränkt auf Brennkraftmaschinen von Kraftfahrzeugen. Vielmehr kann sie auch bei andersartigen Fluidsystemen, insbesondere Gassystemen, Luftsystemen, Reinluftsystemen, Hydrauliksystemen, Kühlsystemen, Fluidsystemen mit Harnstoffwasserlösung oder dergleichen, von Kraftfahrzeugen oder anderen Maschinen, insbesondere Landmaschinen oder Baumaschinen, verwendet werden. Das Filterelement und die Filtervorrichtung können auch außerhalb der Kraftfahrzeugtechnik, insbesondere bei Industriemotoren, eingesetzt werden.

Vorteilhafterweise kann die Filtervorrichtung ein Luftfilter sein. Der Luftfilter kann vorteilhafterweise Teil eines Luftansaugtrakts einer Brennkraftmaschine sein. Er kann zur Reinigung von Verbrennungsluft dienen, welche der Brennkraftmaschine zugeführt wird. Bei dem Luftfilter kann es sich auch um einen Innenraumfilter handeln.

Erfindungsgemäß ist ein axialer Abstand zwischen der Haltefläche und der Dichtungsfläche größer als eine axiale Dicke des radialen Befestigungsabschnitts. Auf diese Weise ist die wenigstens eine Dichtung vom Rand des Filterbalgs weg betrachtet aufgeweitet. So kann ein Risiko verringert werden, dass die Dichtung durch einen freien Raum zwischen dem gehäuseseitigen inneren Andrückabschnitt und dem gehäuseseitigen äußeren Andrückabschnitt hindurch rutschen kann.

Vorteilhafterweise kann ein Verhältnis zwischen dem axialen Abstand zwischen der Haltefläche und der Dichtungsfläche einerseits und der axialen Dicke des radialen Befestigungsabschnitts andererseits etwa zwischen 1 zu 0,3 und 1 zu 0,5, insbesondere etwa 1 zu 0,4, betragen.

Bei einer weiteren vorteilhaften Ausführungsform kann ein Verhältnis zwischen einer axialen Länge des axialen Befestigungsabschnitts und einem axialen Abstand zwischen dem Rand des Filterbalgs und der Dichtungsfläche zwischen etwa 1 zu 1,2 und 1 zu 1,7, insbesondere etwa 1 zu 1,5, betragen. Auf diese Weise kann zwischen der Haltefläche und der Dichtungsfläche eine entsprechend große Stufe realisiert werden, welche ein durchrutschen der wenigstens einen Dichtung durch den freien Bereich zwischen dem gehäuseseitigen inneren Andrückabschnitt und einem gehäuseseitigen äußeren Andrückabschnitt weiter erschweren kann.

Bei einer weiteren vorteilhaften Ausführungsform kann ein axialer Abstand zwischen dem Rand des Filterbalgs und dem Grund der Nut kleiner sein als ein axialer Abstand zwischen dem Rand des Filterbalgs und der Dichtungsfläche. Auf diese Weise kann der äußere Andrückabschnitt entsprechend tief in die Nut eingreifen.

Vorteilhafterweise kann ein Verhältnis zwischen einem axialen Abstand zwischen dem Rand des Filterbalgs und dem Grund der Nut einerseits und einem axialen Abstand zwischen dem Rand des Filterbalgs und der Dichtungsfläche andererseits etwa zwischen 1 zu 1,5 und 1 zu 2,2, insbesondere etwa 1 zu 1,9, betragen.

Bei einer weiteren vorteilhaften Ausführungsform kann eine axiale Höhe der Nut auf ihrer radial inneren Umfangsseite kleiner sein als eine Breite der Nut von radial innen nach radial außen betrachtet im Bereich ihres Grundes und/oder ein axialer Abstand zwischen dem Grund der Nut und dem Rand des Filterbalgs und/oder eine Dicke des axialen Befestigungsabschnitts von radial innen nach radial außen betrachtet und/oder eine axiale Dicke des radialen Befestigungsabschnitts und/oder ein axialer Abstand zwischen dem Rand des Filterelements und der Dichtungsfläche. Auf diese Weise kann insgesamt eine Kompaktheit der wenigstens einen Dichtung verbessert werden. Dabei können eine oder mehrere der genannten Bedingungen erfüllt sein.

Vorteilhafterweise kann ein Verhältnis zwischen einer axialen Höhe der Nut auf ihrer radial inneren Umfangsseite und ein axialer Abstand zwischen dem Grund der Nut und dem freien Rand des axialen Dichtungsvorsprungs zwischen etwa 1 zu 2,7 und 1 zu 3,2, insbesondere etwa 1 zu 3, betragen.

Vorteilhafterweise kann ein Verhältnis zwischen einer axialen Höhe der Nut auf ihrer radial inneren Umfangsseite und einer Breite der Nut von radial innen nach radial außen betrachtet im Bereich ihres Grundes zwischen etwa 1 zu 2,7 und 1 zu 3,2, insbesondere etwa 1 zu 3, betragen.

Vorteilhafterweise kann ein Verhältnis zwischen der axialen Höhe der Nut auf ihrer radial inneren Umfangsseite und dem axialen Abstand zwischen dem Grund der Nut und dem Rand des Filterbalgs zwischen etwa 1 zu 3,5 und 1 zu 4, insbesondere etwa 1 zu 3,7, betragen.

Vorteilhafterweise kann ein Verhältnis zwischen der axialen Höhe der Nut auf ihrer radial inneren Umfangsseite und einer axialen Länge des axialen Befestigungsabschnitts zwischen etwa 1 zu 4,5 und 1 zu 5, insbesondere etwa 1 zu 4,7, betragen.

Vorteilhafterweise kann ein Verhältnis zwischen der axialen Höhe der Nut auf ihrer radial inneren Umfangsseite und einer axialen Dicke des radialen Befestigungsabschnitts zwischen etwa 1 zu 1,7 und 1 zu 2,2, insbesondere etwa 1 zu 2, betragen.

Vorteilhafterweise kann ein Verhältnis zwischen der axialen Höhe der Nut auf ihrer radial inneren Umfangsseite und einem axialen Abstand zwischen dem Rand des Filterelements und der Dichtungsfläche, zwischen etwa 1 zu 6 und 1 zu 8, insbesondere etwa 1 zu 7, betragen.

Bei dem Filtergehäuse ist ein axialer Abstand zwischen der radial äußeren Andrückfläche und der wenigstens einen Dichtfläche größer als ein Abstand zwischen der radial äußeren Andrückfläche und der radial inneren Andrückfläche.

Erfindungsgemäß ist zwischen der radial äußeren Andrückfläche und der radial inneren Andrückfläche eine Lücke realisiert, durch die die wenigstens eine Dichtung hindurchreichen kann. Die Lücke erstreckt sich schräg zur Achse und schräg zu einer Ebene senkrecht zur Achse. Die Abmessung der Dichtungskammer in axialer Richtung ist größer als die Lücke. Auf diese Weise kann in der Dichtungskammer ein Teil der Dichtung mit einer größeren Ausdehnung angeordnet werden, als in der Lücke. So kann verhindert werden, dass die Dichtung bei montiertem Filterelement aus der Dichtungskammer herausgezogen werden kann.

Vorteilhafterweise kann ein Verhältnis des axialen Abstands zwischen der radial äußeren Andrückfläche und der wenigstens einen Dichtfläche einerseits und dem Abstand zwischen der radial äußeren Andrückfläche und der radial inneren Andrückfläche andererseits zwischen etwa 1 zu 0,7 und 1 zu 0,9, insbesondere etwa 1 zu 0,82, betragen.

Vorteilhafterweise kann die Umfangswand wenigstens einen zur Aufnahme der wenigstens einen Dichtung vorgesehenen Teil der Dichtungskammer in bezüglich der Achse axialer Richtung überragen. Die Umfangswand kann zumindest den Aufnahmebereich der Dichtungs-kammer für die Dichtung, also wenigstens die eine Dichtung, überragen. So können die wenigstens eine Dichtung und die Dichtungskammer zur Umgebung hin besser geschützt werden. Ferner kann so die Umfangswand an einem entsprechenden Abschnitt des ersten Gehäuseteils, insbesondere einem entsprechenden Begrenzungsabschnitt, anliegen, so dass die Stabilität des Filtergehäuses insgesamt erhöht werden kann.

Vorteilhafterweise kann die Umfangswand einen die Dichtungskammer axial begrenzenden umfangsmäßigen Begrenzungsabschnitt des wenigstens einen ersten Gehäuseteils radial außen umgeben.

Bei einer vorteilhaften Ausführungsform kann wenigstens ein Gehäuseteil, insbesondere das wenigstens eine erste Gehäuseteil, wenigstens einen Zentrierabschnitt aufweisen. Mit dem wenigstens einen Zentrierabschnitt kann das jeweils andere Gehäuseteil, insbesondere das wenigstens eine zweite Gehäuseteil, und/oder die wenigstens eine Dichtung und/oder das wenigstens eine Filterelement zentriert und/oder positioniert werden.

Mit dem wenigstens einen Zentrierabschnitt können die Gehäuseteile insbesondere beim Zusammenbau zueinander positioniert, zentriert und in diese Position gehalten werden. Auf diese Weise können zwischen den wenigstens zwei Gehäuseteilen wirkende Kräfte besser gehandhabt und/oder eingeleitet werden. Auf diese Weise kann ein Risiko verringert werden, dass die wenigstens eine Dichtung etwaigen Relativbewegungen zwischen den beiden Gehäuseteilen ausgesetzt wird. Durch derartige Relativbewegung kann die wenigstens eine Dichtung beschädigt oder gar zerstört werden, insbesondere reißen.

Ferner kann mit dem wenigstens einen Zentrierabschnitt eine Zentrierung zwischen wenigstens einem Gehäuseteil, insbesondere wenigstens einem ersten Gehäuseteil, und dem wenigstens einen Filterelement erfolgen. Mit der Zentrierung kann das jeweils andere Gehäuseteil, insbesondere das zweite Gehäuseteil, mit dem wenigstens einen Filterelement reproduzierbarer, insbesondere immer gleich, positioniert werden. Auf diese Weise können Fehlertoleranzen bei einer etwaigen Luftmassenmessung und mittels einem in einem der Gehäuseteile, insbesondere dem wenigstens einen zweiten Gehäuseteil, montierten Sensors, insbesondere einem Luftmassenmesser (HFM), verringert werden.

Vorteilhafterweise kann eine Mehrzahl von Zentrierabschnitten bezüglich der Achse umfangsmäßig verteilt angeordnet sein. Auf diese Weise kann eine gleichmäßigere Zentrierung, Halterung und/oder Positionierung erfolgen.

Vorteilhafterweise kann wenigstens ein Zentrierabschnitt als Zentrierrippe realisiert sein. Zentrierrippen können einfach und/oder platzsparend aufgebaut sein. Wenigstens eine Zentrierrippe kann sich vorteilhafterweise bezüglich der Achse von radial innen nach radial außen und axial erstrecken.

Vorteilhafterweise kann das wenigstens eine erste Gehäuseteil wenigstens einen Zentrierabschnitt, insbesondere eine Zentrierrippe, aufweisen, welcher radial außerhalb des äußeren Andrückabschnitts an der radial äußeren Umfangsseite angeordnet ist.

Vorteilhafterweise kann sich der wenigstens eine Zentrierabschnitt an der radial inneren Umfangsseite der Umfangswand des wenigstens einen zweiten Gehäuseteils abstützen.

Vorteilhafterweise kann der wenigstens einen Zentrierabschnitt wenigstens teilweise außerhalb und/oder wenigstens teilweise innerhalb der Dichtungskammer angeordnet sein. Wenigstens ein Zentrierabschnitt kann sich ausschließlich innerhalb, ausschließlich außerhalb oder zum Teil innerhalb und zum Teil außerhalb der Dichtungskammer befinden.

Bei einer weiteren vorteilhaften Ausführungsform kann ein axialer Abstand zwischen der äußeren Andrückfläche und der Dichtfläche kleiner sein als ein axialer Abstand zwischen der Dichtfläche und dem freien Rand der Umfangswand. Auf diese Weise kann zwischen der äußeren Andrückfläche und dem freien Rand der Umfangswand ein freier Raum realisiert werden, welcher zur Aufnahme des Dichtungsvorsprungs der wenigstens einen Dichtung und/oder etwaigen Zentrierabschnitten verwendet werden kann.

Vorteilhafterweise kann ein Verhältnis zwischen dem axialen Abstand zwischen der äußeren Andrückfläche und der Dichtfläche zu dem axialen Abstand zwischen der Dichtfläche und dem freien Rand der Umfangswand etwa zwischen 1 zu 2,5 und 1 zu 3, insbesondere etwa 1 zu 2,8, betragen.

Vorteilhafterweise kann ein Verhältnis zwischen dem axialen Abstand zwischen der äußeren Andrückfläche und Dichtfläche einerseits und einem kleinsten Abstand von radial innen nach radial außen betrachtet zwischen einer radial äußeren Umfangsseite des inneren Andrückabschnitts und einer radial inneren Umfangsseite der Umfangswand andererseits etwa zwischen 1 zu 1,1 und 1 zu 1,3, insbesondere etwa 1 zu 1,2, betragen.

Bei einer weiteren vorteilhaften Ausführungsform kann ein Verhältnis zwischen einem axialen Abstand zwischen der inneren Andrückfläche und der Dichtfläche einerseits und einem axialen Abstand zwischen der inneren Andrückfläche und der äußeren Andrückfläche andererseits zwischen etwa 1 zu 1 und 1 zu 1,2, insbesondere etwa 1 zu 1,1, betragen.

Bei einer weiteren vorteilhaften Ausführungsform kann ein Verhältnis zwischen einem axialen Abstand zwischen der inneren Andrückfläche und der äußeren Andrückfläche einerseits und einem Abstand von radial außen nach radial innen betrachtet zwischen der radial inneren Umfangsseite des äußeren Andrückabschnitts und der radial äußeren Umfangsseite des inneren Andrückabschnitts andererseits zwischen etwa 1 zu 0,7 und 1 zu 0,9, insbesondere etwa 1 zu 0,8, betragen.

Bei einer weiteren vorteilhaften Ausführungsform können ein kleinster Abstand von radial innen nach radial außen betrachtet zwischen einer radial äußeren Umfangsseite des äußeren Andrückabschnitts und einer radial inneren Umfangsseite der Umfangswand und ein Abstand von radial innen nach radial außen betrachtet zwischen einer radial äußeren Umfangsseite des inneren Andrückabschnitts und einer radial inneren Umfangsseite des äußeren Andrückabschnitts etwa gleich groß sein.

Vorteilhafterweise kann ein Abstand von radial außen nach radial innen betrachtet der radial inneren Umfangsseite der Umfangswand im Bereich ihres freien Randes zu der radial äußeren Umfangsseite des inneren Andrückabschnitts größer sein als ein Abstand von radial außen nach radial innen betrachtet der radial inneren Umfangsseite der Umfangswand im Bereich der Dichtfläche zu der radial äußeren Umfangsseite des inneren Andrückabschnitts. Auf diese Weise kann sich die Umfangswand in axialer Richtung zu ihrem freien Rand hin trichterartig aufweiten. So kann ein Aufstecken des zweiten Gehäuseteils auf das erste Gehäuseteil vereinfacht werden.

Vorteilhafterweise kann ein Verhältnis zwischen einem Abstand von radial außen nach radial innen betrachtet der radial inneren Umfangsseite der Umfangswand im Bereich ihres freien Randes zu der radial äußeren Umfangsseite des inneren Andrückabschnitts einerseits und einem Abstand von radial außen nach radial innen betrachtet der radial inneren Umfangsseite der Umfangswand im Bereich der Dichtfläche zu der radial äußeren Umfangsseite des inneren Andrückabschnitts andererseits zwischen etwa 1 zu 0,7 und 1 zu 0,8, insbesondere etwa 1 zu 0,75, betragen.

Vorteilhafterweise kann ein axialer Abstand zwischen einer der Dichtfläche zugewandten Seite wenigstens eines etwaigen Zentrierabschnitts und dem freien Rand der Umfangswand kleiner sein als ein axialer Abstand zwischen der entsprechenden Seite des wenigstens einen Zentrierabschnitts und der Dichtfläche.

Vorteilhafterweise kann ein Verhältnis zwischen dem axialen Abstand zwischen einer der Dichtfläche zugewandten Seite des wenigstens einen Zentrierabschnitts und dem freien Rand der Umfangswand einerseits und einem axialen Abstand zwischen der entsprechenden Seite des wenigstens einen Zentrierabschnitts und der Dichtfläche andererseits zwischen etwa 1 zu 1,3 und 1 zu 1,7, insbesondere etwa 1 zu 1,5, betragen.

Vorteilhafterweise kann ein axialer Abstand zwischen der inneren Andrückfläche und dem freien Rand der Umfangswand größer sein als ein Abstand von radial innen nach radial außen betrachtet zwischen der radial äußeren Umfangsseite des inneren Andrückabschnitts und der radial inneren Umfangsseite der Umfangswand im Bereich ihres freien Randes.

Vorteilhafterweise kann ein Verhältnis eines axialen Abstands zwischen der inneren Andrückfläche und dem freien Rand der Umfangswand und einem Abstand von radial innen nach radial außen betrachtet zwischen der radial äußeren Umfangsseite des inneren Andrückabschnitts und der radial inneren Umfangsseite der Umfangswand im Bereich ihres freien Randes etwa zwischen 1 zu 0,6 und 1 zu 0,8, insbesondere etwa 1 zu 0,7, betragen.

Vorteilhafterweise kann ein Verhältnis zwischen einem Abstand von radial außen nach radial innen betrachtet zwischen einer bezüglich der Achse radial am weitesten innen gelegenen Stelle und einer radial am weitesten außen gelegenen Stelle der Umfangswand und einem axialen Abstand zwischen der Dichtfläche und dem freien Rand der Umfangswand etwa zwischen 1 zu 15 und 1 zu 17, insbesondere etwa 1 zu 16, betragen.

Bei einer weiteren vorteilhaften Ausführungsform kann ein axialer Abstand zwischen wenigstens einem Zentrierabschnitt und der äußeren Andrückfläche kleiner sein als ein axialer Abstand zwischen der äußeren Andrückfläche und der Dichtfläche.

Vorteilhafterweise kann ein Verhältnis zwischen einem axialen Abstand zwischen wenigstens einem Zentrierabschnitt und der äußeren Andrückfläche einerseits und einem axialen Abstand zwischen der äußeren Andrückfläche und der Dichtfläche andererseits etwa zwischen 1 zu 1,4 und 1 zu 1,6, insbesondere etwa 1 zu 1,5, betragen.

Vorteilhafterweise kann ein kleinster Abstand von radial innen nach radial außen betrachtet zwischen der radial äußeren Umfangsseite des inneren Andrückabschnitts und der radial inneren Umfangsseite der Umfangswand kleiner sein als ein axialer Abstand zwischen der Dichtfläche und dem wenigstens einen Zentrierabschnitt.

Vorteilhafterweise kann ein Verhältnis zwischen einem kleinsten Abstand von radial innen nach radial außen betrachtet zwischen der radial äußeren Umfangsseite des inneren Andrückabschnitts und der radial inneren Umfangsseite der Umfangswand einerseits und einem axialen Abstand zwischen der Dichtfläche und dem wenigstens einen Zentrierabschnitt andererseits etwa zwischen 1 zu 1,3 und 1 zu 1,5, insbesondere etwa 1 zu 1,4, betragen.

Vorteilhafterweise kann ein Verhältnis zwischen einem axialen Abstand zwischen der äußeren Andrückfläche und der Dichtfläche einerseits und einem axialen Abstand zwischen der äußeren Andrückfläche und dem freien Rand der Umfangswand andererseits zwischen etwa 1 zu 1,6 und 1 zu 2, insbesondere etwa 1 zu 1,8, betragen.

Außerdem wird die technische Aufgabe mit der Filtervorrichtung nach Anspruch 5 gelöst, wobei in dem Filtergehäuse wenigstens ein erfindungsgemäßes Filterelement so angeordnet ist, dass es den wenigstens einen Einlass von dem wenigstens einen Auslass trennt und die wenigstens eine Dichtung des wenigstens einen Filterelements in der Dichtungskammer des Filtergehäuses angeordnet ist.

Im Übrigen gelten die im Zusammenhang mit dem erfindungsgemäßen Filterelement, dem Filtergehäuse und der erfindungsgemäßen Filtervorrichtung und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen isometrischen Teilschnitt eines Luftfilters mit einem Filtergehäuse, in dem ein Filterelement angeordnet ist;
- Figur 2: einen Querschnitt des Luftfilters aus der Figur 1 durch eine Dichtungskammer zwischen einem Gehäusetopf und einer Gehäusehaube entlang einer Schnittlinie II-II aus der Figur 4;
- Figur 3: eine Draufsicht des Luftfilters aus der Figur 1;
- Figur 4: einen ersten Längsschnitt des Luftfilters aus den Figuren 1 und 3 entlang einer Schnittlinie IV-IV aus der Figur 3;
- Figur 5: einen zweiten Längsschnitt des Luftfilters aus den Figuren 1 und 3 entlang einer Schnittlinie V-V aus der Figur 3, hier ohne Filterelement;
- Figur 6: eine maßstabsgetreue Detailansicht eines Längsschnitts des Filterelements des Luftfilters im Bereich einer Dichtung;
- Figur 7: eine maßstabsgetreue Detailansicht des Längsschnitts des Luftfilters ohne Filterelement aus der Figur 5 im Bereich einer Dichtungskammer.

In den Figuren sind gleiche Bauteile mit gleichen Bezugszeichen versehen.

### Ausführungsform(en) der Erfindung

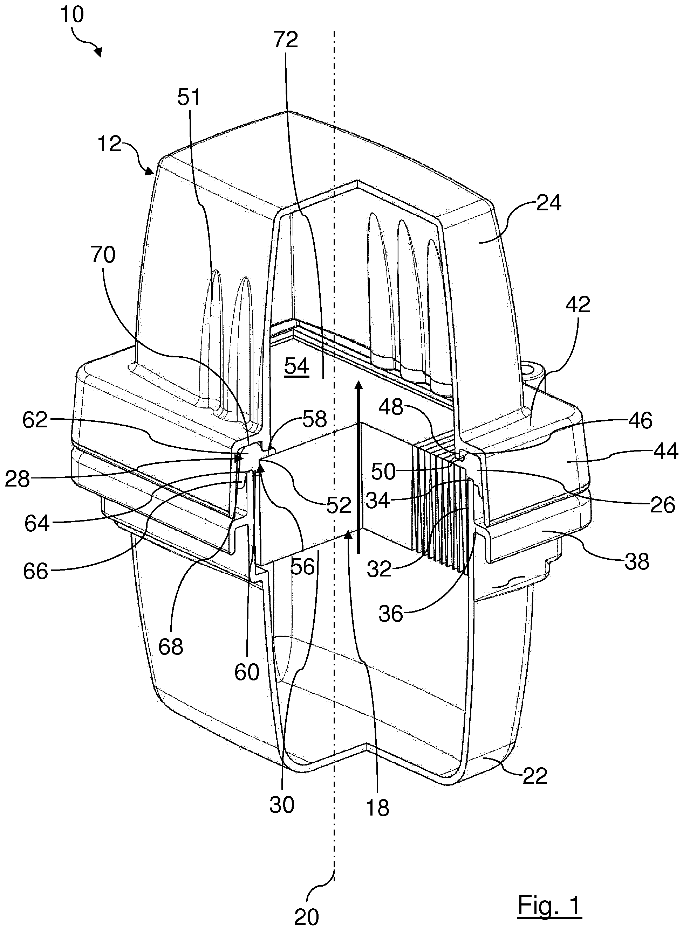

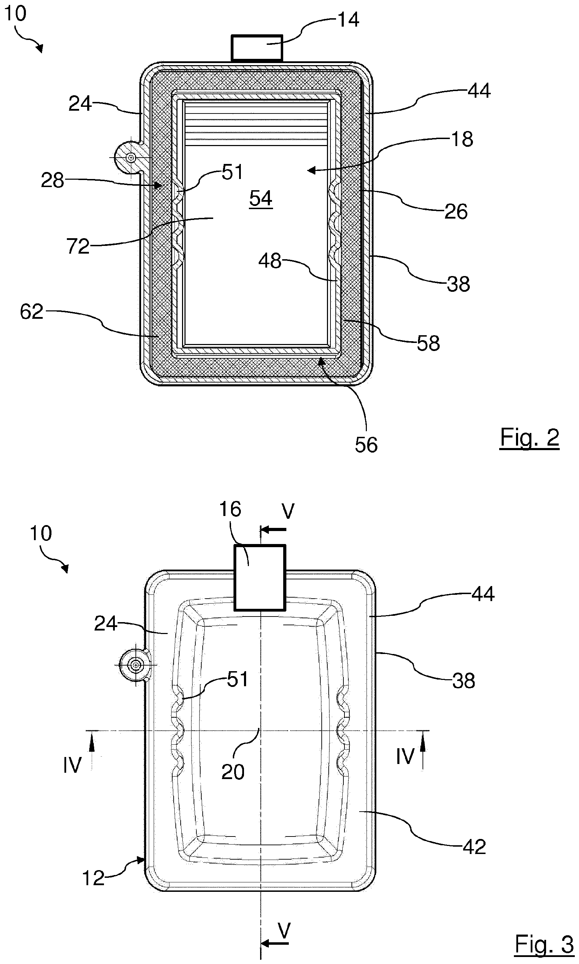

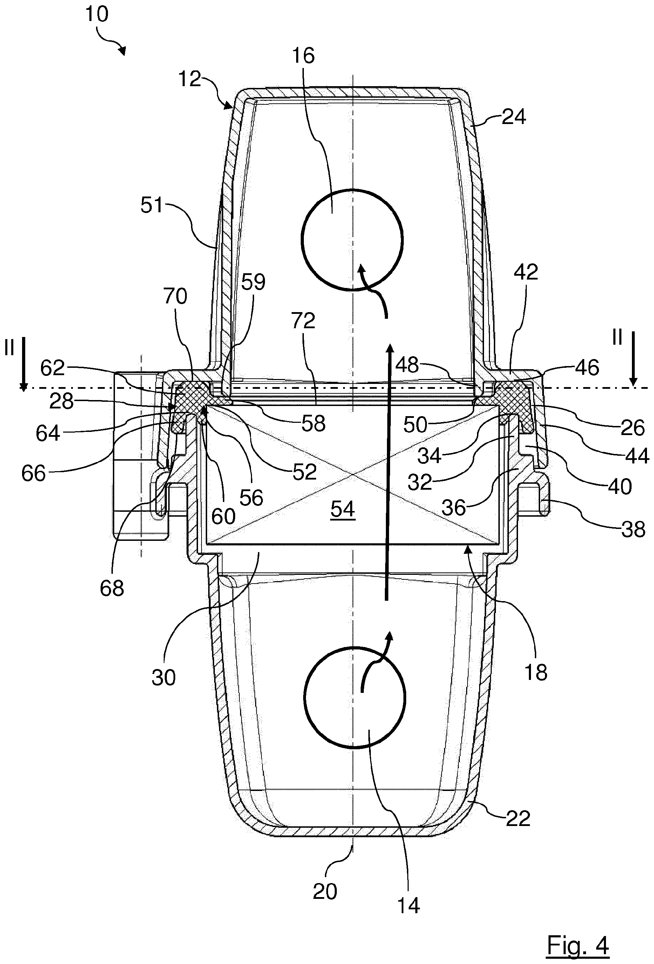

In den Figuren 1 bis 7 ist eine Filtervorrichtung in Form eines Luftfilters 10 in unterschiedlichen Perspektiven, Schnitten und Detailansichten gezeigt. Der Luftfilter 10 kann zur Reinigung von Verbrennungsluft in einem Ansaugtrakt einer Brennkraftmaschine eines Kraftfahrzeugs angeordnet sein.

Der Luftfilter 10 umfasst ein Luftfiltergehäuse 12 mit einem Einlass 14 für zu reinigende Luft und einem Auslass 16 für gereinigte Luft. In dem Luftfiltergehäuse 12 ist ein Filterelement 18 austauschbar so angeordnet, dass es den Einlass 14 von dem Auslass 16 trennt. Das Luftfiltergehäuse 12 hat in der Draufsicht axial zu einer Achse 20 betrachtet beispielhaft einen etwa rechteckigen Umfang.

Die Achse 20 fällt in dem Ausführungsbeispiel zusammen mit einer Gehäuseachse des Luftfiltergehäuses 12, einer Einbau-/Ausbauachse des Filterelements 18 in einen Gehäusetopf 22 des Luftfiltergehäuses 12, einer Verbindungsachse einer Gehäusehaube 24 des Luftfiltergehäuses 12 mit dem Gehäusetopf 22 und einer Elementachse des Filterelements 18. Der besseren Übersichtlichkeit wegen sind im Folgenden die Elementachse, die Gehäuseachse, die Verbindungsachse und die Einbau-/Ausbauachse mit demselben Bezugszeichen 20 versehen und werden kurz als Achse 20 bezeichnet. Es versteht sich, dass bei ausgebautem Filterelement 18, je nach Kontext, die Gehäuseachse, die Elementachse und/oder die Einbau-/Ausbauachse gemeint ist. Wenn im Folgenden von "radial", "koaxial", "axial", "tangential", "umfangsmäßig", "konzentrisch", "exzentrisch" oder dergleichen die Rede ist, so bezieht sich dies, sofern nicht anders erwähnt, auf die Achse 20

Das Luftfiltergehäuse 12 umfasst den Gehäusetopf 22, in den Figuren 1, 4 und 5 unten, welcher mit der Gehäusehaube 24, oben, verschlossen ist. Die Gehäusehaube 24 ist trennbar mit dem Gehäusetopf 22 verbunden. Die Gehäusehaube 24 ist mit ihrem freien Rand auf die offene Seite des Gehäusetopfs 22 in axialer Richtung aufgesteckt.

Im Bereich ihrer jeweiligen offenen Seiten begrenzen der Gehäusetopf 22 und die Gehäusehaube 24 eine umfangsmäßig verlaufende Dichtungskammer 26. Die Dichtungskammer 26 dient zur Aufnahme einer umfangsmäßigen Dichtung 28 des Filterelements 18. Die Dichtung 28 ist in der Dichtungskammer 26 zwischen dem Gehäusetopf 22 und der Gehäusehaube 24 angeordnet.

Der Einlass 14 ist in einer Seitenwand des Gehäusetopfs 22 angeordnet. Der Auslass 16 befindet sich in einer entsprechenden Seitenwand der Gehäusehaube 24. Der Einlass 14 und der Auslass 16 können auch an anderen Stellen des Gehäusetopfs 22 und der Gehäusehaube 24 angeordnet sein. Bei einer Umkehrung der Strömungsrichtung kann auch der Einlass 14 als Auslass und der Auslass 16 als Einlass dienen.

Im Bereich seiner offenen Seite weist der Gehäusetopf 22 einen querschnittserweiterten Bereich auf, welcher einen Aufnahmeraum 30 für das Filterelement 18 bildet.

Der umfangsmäßige Rand des Gehäusetopfs 22 an seiner freien Seite bildet einen radial äußeren Andrückabschnitt 32 in Form einer Dichtrippe für die Dichtung 28. Der äußere Andrückabschnitt 32 erstreckt sich umfangsmäßig und parallel zur Achse 20, also axial. Der äußere Andrückabschnitt 32 begrenzt die Dichtungskammer 26 radial innen. Die axiale Stirnseite des äußeren Andrückabschnitts 32 bildet eine radial äußere Andrückfläche 34. Die äußere Andrückfläche 34 erstreckt sich umfangsmäßig und radial.

Auf der der äußeren Andrückfläche 34 axial abgewandten Seite geht der äußere Andrückabschnitt 32 einstückig in einen umfangsmäßigen Begrenzungsabschnitt 36 über. Der Begrenzungsabschnitt 36 ist zweifach nach radial außen gestuft. Der Begrenzungsabschnitt 36 begrenzt die Dichtungskammer 26 auf der entsprechenden axialen Stirnseite.

Im Anschluss an seine zweite Stufe geht der Begrenzungsabschnitt 36 in einen umfangsmäßigen Kragen 38 über. Der Kragen 38 erstreckt sich umfangsmäßig und axial von der Gehäusehaube 24 weg.

An der der Gehäusehaube 24 zugewandten axialen Stirnseite des Begrenzungsabschnitts 36 ist an der radial äußeren Umfangsseite des äußeren Andrückabschnitts 32 eine Mehrzahl von Zentrierabschnitten 40 in Form von Zentrierrippen angeordnet. Die Zentrierabschnitte 40 sind umfangsmäßig verteilt angeordnet. Sie erstrecken sich jeweils etwa senkrecht zur radial äußeren Umfangsseite des äußeren Andrückabschnitts 32 von radial innen nach radial außen und in axialer Richtung.

Die Gehäusehaube 24 ist im Bereich ihrer offenen Seite nach radial außen abgestuft. Ein sich umfangsmäßig und von radial innen nach radial außen erstreckender Abschnitt dient als Dichtabschnitt 42. Radial außen an den Dichtabschnitt 42 schließt sich einstückig eine Umfangswand 44 an. Die Umfangswand 44 erstreckt sich umfangsmäßig und leicht schräg zur Achse 20. Die Umfangswand 44 befindet sich auf der dem Gehäusetopf 22 axial zugewandten Seite des Dichtabschnitts 42. Die Umfangswand 44 öffnet sich leicht trichterartig zu ihrem freien Rand hin. Bei geschlossenem Luftfiltergehäuse 12 begrenzt die Umfangswand 44 die Dichtungskammer 26 radial außen.

Eine axial innere Seite des Dichtabschnitts 42 bildet eine Dichtfläche 46. Die Dichtfläche 46 erstreckt sich umfangsmäßig und von radial innen nach radial außen. An der Dichtfläche 46 kann die Dichtung 28 in axialer Richtung dichtend anliegen.

Radial innerhalb des Dichtabschnitts 42 befindet sich ein radial innerer Andrückabschnitt 48 in Form einer Halterippe. Der innere Andrückabschnitt 48 erstreckt sich umfangsmäßig und etwa parallel zur Achse 20, also parallel zum äußeren Andrückabschnitt 32. Der innere Andrückabschnitt 48 begrenzt die Dichtungskammer 26 aufseiten der Gehäusehaube 24 radial innen. Eine dem Gehäusetopf 22 zugewandte Stirnseite des inneren Andrückabschnitts 48 bildet eine radial innere Andrückfläche 50.

Der radial innere Andrückabschnitt 48 befindet sich radial innerhalb des radial äußeren Andrückabschnitts 32. Die innere Andrückfläche 50 und die äußere Andrückfläche 34 sind sowohl axial als auch radial zueinander beabstandet.

Eine Lücke 123 zwischen der inneren Andrückfläche 50 und der äußeren Andrückfläche 34 bildet eine Durchführung für einen Teil der Dichtung 28. Die Dichtungskammer 26 wird außerhalb der Lücke 123 durch den Dichtabschnitt 42, die Umfangswand 44, den Begrenzungsabschnitt 36, den äußeren Andrückabschnitt 32 und den inneren Andrückabschnitt 48 begrenzt.

Die Umfangswand 44 überragt die Dichtungskammer 26 im Bereich des für die Dichtung 28 vorgesehenen Raums und im Bereich mit den Zentrierabschnitten 40. Ferner überragt die Umfangswand 44 einen Teil des Begrenzungsabschnitts 36 des Gehäusetopfs 22.

Bei montiertem Luftfiltergehäuse 12 liegt die Umfangswand 44 mit ihrer radial inneren Umfangsseite an den radial äußeren Seiten der Zentrierrippen 40 jeweils an. Dadurch wird die Gehäusehaube 24 auf dem Gehäusetopf 22 zentriert.

Ferner verfügt die Gehäusehaube 24 in gegenüberliegenden Seitenwänden über jeweils drei sich nach radial innen erhebende, axial erstreckende länglichen Buchten 51.

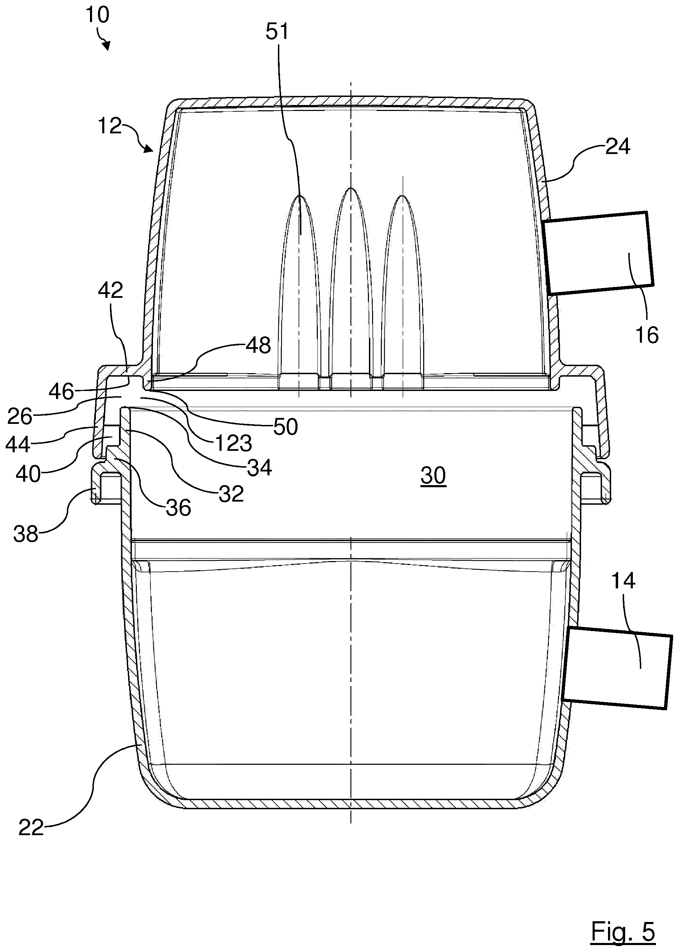

Die Dichtung 28 wird im Folgenden anhand der Figur 5 näher erläutert. Bei der Dichtung 28 handelt es sich um eine Polyurethandichtung, welche an einen stirnseitigen Rand 52 eines Filterbalgs 54 des Filterelements 18 angeschäumt ist. Insgesamt ist die Dichtung 28 einstückig aufgebaut. Bei dem gezeigten Ausführungsbeispiel bildet eine Stirnseite 72 des Filterbalgs 54 mit der Dichtung 28 eine Rohseite des Filterelements 18. Die axial gegenüberliegende Stirnseite bildet eine Reinseite. Bei umgekehrter Durchströmrichtung kann sich die Dichtung 28 alternativ auch auf der Reinseite befinden.

Der Filterbalg 54 umfasst beispielhaft ein zickzackförmig gefaltetes Filtermedium, beispielsweise Filtervlies. Der Filterbalg 54 hat eine etwa quaderförmige Gestalt. Er kann beispielhaft als so genanntes Flachfilterelement ausgelegt sein.

Die Dichtung 28 überragt den Rand 52 des Filterbalgs 54 sowohl in axialer Richtung als auch von radial innen nach radial außen betrachtet.

Die Dichtung 28 verfügt über einen umfangsmäßigen Befestigungsbereich 56, mit dem sie am Filterbalg 54 befestigt ist. Der Befestigungsbereich 56 umfasst einen umfangsmäßigen radialen Befestigungsabschnitt 58 und einen umfangsmäßigen axialen Befestigungsabschnitt 60.

Der radiale Befestigungsabschnitt 58 erstreckt sich umfangsmäßig und im Wesentlichen quer zur Achse 20 von radial innen nach radial außen. Auf seiner dem Filterbalg 54 axial abgewandten Seite weist der radiale Befestigungsabschnitt 58 eine Haltefläche 59 auf. Der axiale Befestigungsabschnitt 60 erstreckt sich umfangsmäßig und im Wesentlichen parallel, also axial zur Achse 20. Der Befestigungsbereich 56 umgreift mit dem radialen Befestigungsabschnitt 58 und dem axialen Befestigungsabschnitt 60 den Rand 52 des Filterbalgs 54.

An den Befestigungsbereich 56 schließt sich radial außen ein umfangsmäßiger Dichtungsbereich 62 an. Eine dem Filterbalg 54 abgewandte Rückseite des axialen Befestigungsabschnitts 60 bildet eine radial innere Begrenzung einer umfangsmäßigen Nut 64 zur Aufnahme des radial äußeren Andrückabschnitts 32 des Gehäusetopfs 22.

Auf ihrer radial äußeren Umfangsseite wird die Nut 64 durch einen umfangsmäßigen Dichtungsvorsprung 66 der Dichtung 28 begrenzt. Der Dichtungsvorsprung 66 erstreckt sich etwa axial, leicht schräg zur Achse 20. Der Dichtungsvorsprung 66 überragt den axialen Befestigungsabschnitt 60 in axialer Richtung.

Bei montiertem Luftfilter 10 endet ein freier Rand 68 des Dichtungsvorsprungs 66 etwa auf Höhe der Zentrierabschnitte 40.

Auf der der Nut 64 axial gegenüberliegenden Außenseite des Dichtungsbereichs 62 der Dichtung 28 ist eine axial wirkende umfangsmäßige Dichtungsfläche 70 angeordnet. Die Dichtungsfläche 70 befindet sich in einem größeren axialen Abstand zur Stirnseite 72 des Filterbalgs 54 als die innere Andrückfläche 50.

Bei montiertem Luftfilter 10 greift der äußere Andrückabschnitt 32 umfangsmäßig in die Nut 64 ein. Die äußere Andrückfläche 34 drückt den Dichtungsbereich 62 in axialer Richtung gegen den Dichtabschnitt 42 der Gehäusehaube 24 und sorgt dabei für ein axial dichtendes Anliegen der Dichtungsfläche 70 an der Dichtfläche 46. Außerdem drückt der innere Andrückabschnitt 48 in axialer Richtung gegen den radialen Befestigungsabschnitt 58 der Dichtung 28 und klemmt so die Dichtung 28 gegenüber dem äußeren Andrückabschnitt 32 ein.

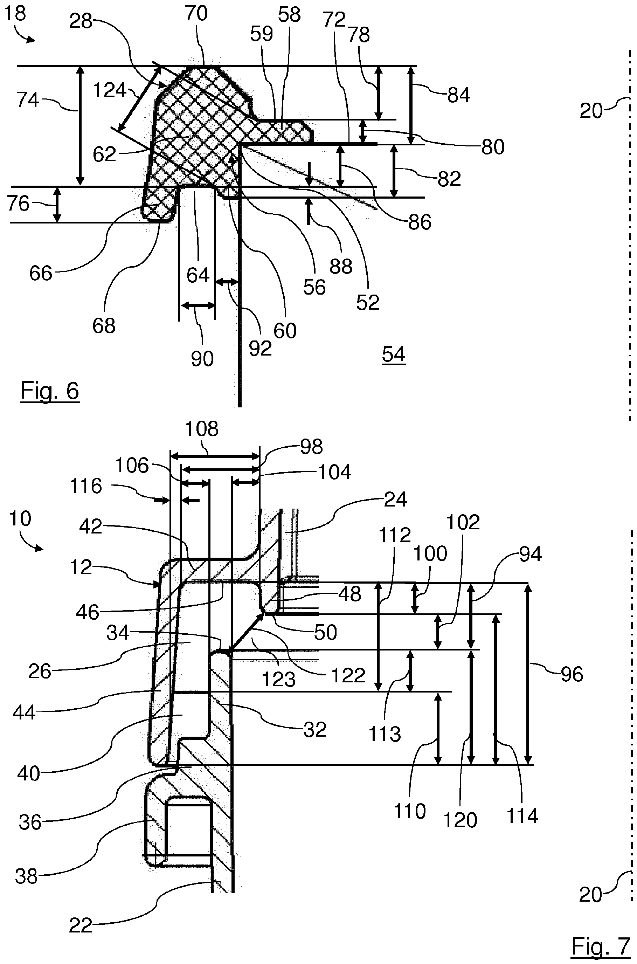

Im Folgenden sind beispielhaft einige Proportionen des Luftfiltergehäuses 12 und der Dichtung 28 anhand der Figuren 6 und 7 aufgezeigt. Weitere Proportionen können den maßstabsgerechten Darstellungen aus den Figuren 6 und 7 entnommen werden.

Ein axialer Abstand 74 zwischen dem Grund der Nut 64 und der Dichtungsfläche 70 ist größer als ein Abstand 124 zwischen einem Übergang des Grundes der Nut 64 zu dem axialen Befestigungsabschnitt 60 und einem Übergang der Haltefläche 59 zu dem Dichtungsbereich 62.

Ein Verhältnis zwischen dem axialen Abstand 74 zwischen dem Grund der Nut 64 und der Dichtungsfläche 70 einerseits und dem Abstand 124 zwischen dem Übergang des Grundes der Nut 64 zu dem axialen Befestigungsabschnitt 60 und dem Übergang der Haltefläche 59 zu dem Dichtungsbereich 62 andererseits beträgt etwa 1 zu 0,66.

Ein axialer Abstand 74 zwischen einem Grund der Nut 64 und der Dichtungsfläche 70 ist größer als ein axialer Abstand 76 zwischen dem Grund der Nut 64 und dem freien Rand 68 des Dichtungsvorsprungs 66. Ein Verhältnis zwischen dem axialen Abstand 74 zwischen dem Grund der Nut 64 und der Dichtungsfläche 70 einerseits und einem axialen Abstand 76 zwischen dem Grund der Nut 64 und dem freien Rand 68 des Dichtungsvorsprungs 66 andererseits beträgt etwa 1 zu 0,28.

Ein axialer Abstand 78 zwischen der Haltefläche 59 und der Dichtungsfläche 70 ist größer als eine axiale Dicke 80 des radialen Befestigungsabschnitts 58. Ein Verhältnis zwischen dem axialen Abstand 78 zwischen der Haltefläche 59 und der Dichtungsfläche 70 einerseits und der axialen Dicke 80 des radialen Befestigungsabschnitts 58 andererseits beträgt etwa 1 zu 0,4.

Ein Verhältnis zwischen einer axialen Länge 82 des axialen Befestigungsabschnitts 60 und einem axialen Abstand 84 zwischen dem Rand 52 des Filterbalgs 54 und der Dichtungsfläche 70 beträgt etwa 1 zu 1,5.

Ein axialer Abstand 86 zwischen dem Rand 52 des Filterbalgs 54 und dem Grund der Nut 64 ist kleiner als der axiale Abstand 84 zwischen dem Rand 52 des Filterbalgs 54 und der Dichtungsfläche 70. Ein Verhältnis zwischen dem axialen Abstand 86 zwischen dem Rand 52 des Filterbalgs 54 und dem Grund der Nut 64 einerseits und dem axialen Abstand 84 zwischen dem Rand 52 des Filterbalgs 54 und der Dichtungsfläche 70 andererseits beträgt etwa 1 zu 1,9.

Eine axiale Höhe 88 der Nut 64 auf ihrer radial inneren Umfangsseite ist kleiner als eine Breite 90 der Nut 64 von radial innen nach radial außen betrachtet im Bereich ihres Grundes. Die axiale Höhe 88 der Nut 64 auf ihrer radial inneren Umfangsseite ist kleiner als der axiale Abstand 86 zwischen dem Grund der Nut 64 und dem Rand 52 des Filterbalgs 54. Die axiale Höhe 88 der Nut 64 auf ihrer radial inneren Umfangsseite ist kleiner als eine Dicke 92 des axialen Befestigungsabschnitts 60 von radial innen nach radial außen betrachtet. Die axiale Höhe 88 der Nut 64 auf ihrer radial inneren Umfangsseite ist kleiner als die axiale Dicke 80 des radialen Befestigungsabschnitts 58. Die axiale Höhe 88 der Nut 64 auf ihrer radial inneren Umfangsseite ist kleiner als der axiale Abstand 84 zwischen dem Rand 52 des Filterbalgs 54 und der Dichtungsfläche 70.

Ein Verhältnis zwischen der axialen Höhe 88 der Nut 64 auf ihrer radial inneren Umfangsseite und dem axialen Abstand 76 zwischen dem Grund der Nut 64 und dem freien Rand 68 des axialen Dichtungsvorsprungs 66 beträgt etwa 1 zu 3.

Ein Verhältnis zwischen der axialen Höhe 88 der Nut 64 auf ihrer radial inneren Umfangsseite und der Breite 90 der Nut 64 von radial innen nach radial außen betrachtet im Bereich ihres Grundes beträgt etwa 1 zu 3.

Ein Verhältnis zwischen der axialen Höhe 88 der Nut 64 auf ihrer radial inneren Umfangsseite und dem axialen Abstand 86 zwischen dem Grund der Nut 64 und dem Rand 52 des Filterbalgs 54 beträgt etwa 1 zu 3,7.

Ein Verhältnis zwischen der axialen Höhe 88 der Nut 64 auf ihrer radial inneren Umfangsseite zu der axialen Länge 82 des axialen Befestigungsabschnitts 60 beträgt etwa 1 zu 4,7.

Ein Verhältnis zwischen der axialen Höhe 88 der Nut 64 auf ihrer radial inneren Umfangsseite zu der axialen Dicke 80 des radialen Befestigungsabschnitts 58 beträgt etwa 1 zu 2.

Ein Verhältnis zwischen der axialen Höhe 88 der Nut 64 auf ihrer radial inneren Umfangsseite einerseits und dem axialen Abstand 84 zwischen dem Rand 52 des Filterbalgs 54 und der Dichtungsfläche 70 andererseits beträgt etwa 1 zu 7.

Ein axialer Abstand 94 zwischen der radial äußeren Andrückfläche 34 und der Dichtfläche 46 ist größer als ein Abstand 122 zwischen der radial äußeren Andrückfläche 34 und der radial inneren Andrückfläche 50.

Ein Verhältnis des axialen Abstands 94 zwischen der radial äußeren Andrückfläche 34 und der Dichtfläche 46 einerseits und dem Abstand 122 zwischen der radial äußeren Andrückfläche 34 und der radial inneren Andrückfläche 50 andererseits beträgt etwa 1 zu 0,82.

Der axiale Abstand 94 zwischen der äußeren Andrückfläche 34 und der Dichtfläche 46 ist kleiner als ein axialer Abstand 96 zwischen der Dichtfläche 46 und einem freien Rand der Umfangswand 44. Ein Verhältnis zwischen dem axialen Abstand 94 zwischen der äußeren Andrückfläche 34 und der Dichtfläche 46 einerseits zu dem axialen Abstand 96 zwischen der Dichtfläche 46 und dem freien Rand der Umfangswand 44 andererseits beträgt etwa 1 zu 2,8.

Ein Verhältnis zwischen dem axialen Abstand 94 zwischen der äußeren Andrückfläche 34 und der Dichtfläche 46 einerseits und einem kleinsten Abstand 98 von radial innen nach radial außen betrachtet zwischen einer radial äußeren Umfangsseite des inneren Andrückabschnitts 48 und einer radial inneren Umfangsseite der Umfangswand 44 andererseits beträgt etwa 1 zu 1,2.

Ein Verhältnis zwischen einem axialen Abstand 100 zwischen der inneren Andrückfläche 50 und der Dichtfläche 46 einerseits und einem axialen Abstand 102 zwischen der inneren Andrückfläche 50 und der äußeren Andrückfläche 34 andererseits beträgt etwa 1 zu 1,1.

Ein Verhältnis zwischen dem axialen Abstand 102 zwischen der inneren Andrückfläche 50 und der äußeren Andrückfläche 34 einerseits und einem Abstand 104 von radial außen nach radial innen betrachtet zwischen der radial inneren Umfangsseite des äußeren Andrückabschnitts 32 und der radial äußeren Umfangsseite des inneren Andrückabschnitts 48 andererseits beträgt etwa 1 zu 0,8.

Ein kleinster Abstand 106 von radial innen nach radial außen betrachtet zwischen einer radial äußeren Umfangsseite des äußeren Andrückabschnitts 32 und einer radial inneren Umfangsseite der Umfangswand 44 und der Abstand 104 von radial innen nach radial außen betrachtet zwischen einer radial äußeren Umfangsseite des inneren Andrückabschnitts 48 und einer radial inneren Umfangsseite des äußeren Andrückabschnitts 32 sind etwa gleich groß.

Ein Abstand 108 von radial außen nach radial innen betrachtet der radial inneren Umfangsseite der Umfangswand 44 im Bereich ihres freien Randes zu der radial äußeren Umfangsseite des inneren Andrückabschnitts 48 ist größer als der Abstand 98 von radial außen nach radial innen betrachtet der radial inneren Umfangsseite der Umfangswand 44 im Bereich der Dichtfläche 46 zu der radial äußeren Umfangsseite des inneren Andrückabschnitts 48. Ein Verhältnis zwischen dem Abstand 108 von radial außen nach radial innen betrachtet der radial inneren Umfangsseite der Umfangswand 44 im Bereich ihres freien Randes zu der radial äußeren Umfangsseite des inneren Andrückabschnitts 48 einerseits und dem Abstand 98 von radial außen nach radial innen betrachtet der radial inneren Umfangsseite der Umfangswand 44 im Bereich der Dichtfläche 46 zu der radial äußeren Umfangsseite des inneren Andrückabschnitts 48 andererseits beträgt etwa 1 zu 0,75.

Ein axialer Abstand 110 zwischen den jeweiligen der Dichtfläche 46 zugewandten Seiten der Zentrierabschnitte 40 und dem freien Rand der Umfangswand 44 ist kleiner als ein axialer Abstand 112 zwischen den entsprechenden Seiten der Zentrierabschnitte 40 und der Dichtfläche 46. Ein Verhältnis zwischen dem axialen Abstand 110 zwischen den der Dichtfläche 46 zugewandten Seiten der Zentrierabschnitte 40 und dem freien Rand der Umfangswand 44 einerseits und dem axialen Abstand 112 zwischen den entsprechenden Seiten der Zentrierabschnitte 40 und der Dichtfläche 46 andererseits beträgt etwa 1 zu 1,5.

Ein axialer Abstand 114 zwischen der inneren Andrückfläche 50 und dem freien Rand der Umfangswand 44 ist größer als der Abstand 108 von radial innen nach radial außen betrachtet zwischen der radial äußeren Umfangsseite des inneren Andrückabschnitts 48 und der radial inneren Umfangsseite der Umfangswand 44 im Bereich ihres freien Randes. Ein Verhältnis zwischen dem axialen Abstand 114 zwischen der inneren Andrückfläche 50 und dem freien Rand der Umfangswand 44 einerseits und dem Abstand 108 von radial innen nach radial außen betrachtet zwischen der radial äußeren Umfangsseite des inneren Andrückabschnitts 48 und der radial inneren Umfangsseite der Umfangswand 44 im Bereich ihres freien Randes andererseits beträgt etwa 1 zu 0,7.

Ein Verhältnis zwischen einem Abstand 116 von radial außen nach radial innen betrachtet zwischen einer bezüglich der Achse 20 radial am weitesten innen liegenden Stelle und einer radial am weitesten außen liegenden Stelle der Umfangswand 44 und dem axialen Abstand 96 zwischen der Dichtfläche 46 und dem freien Rand der Umfangswand 44 beträgt etwa 1 zu 16.

Ein axialer Abstand zwischen den Zentrierabschnitten 40 und der äußeren Andrückfläche 34 ist kleiner als der axiale Abstand 94 zwischen der äußeren Andrückfläche 34 und der Dichtfläche 46. Ein Verhältnis zwischen dem axialen Abstand zwischen den Zentrierabschnitten 40 und der äußeren Andrückfläche 34 einerseits und dem axialen Abstand 94 zwischen der äußeren Andrückfläche 34 und der Dichtfläche 46 andererseits beträgt etwa 1 zu 1,5.

Der kleinste Abstand 98 von radial innen nach radial außen betrachtet zwischen der radial äußeren Umfangsseite des inneren Andrückabschnitts 48 und der radial inneren Umfangsseite der Umfangswand 44 ist kleiner als der axiale Abstand 112 zwischen der Dichtfläche 46 und den Zentrierabschnitten 40.

Ein Verhältnis zwischen dem kleinsten Abstand 98 von radial innen nach radial außen betrachtet zwischen der radial äußeren Umfangsseite des inneren Andrückabschnitts 48 und der radial inneren Umfangsseite der Umfangswand 44 einerseits und dem axialen Abstand 112 zwischen der Dichtfläche 46 und den Zentrierabschnitten 40 andererseits beträgt etwa 1 zu 1,4.

Ein Verhältnis zwischen dem axialen Abstand 94 zwischen der äußeren Andrückfläche 34 und der Dichtfläche 46 einerseits und einem axialen Abstand 120 zwischen der äußeren Andrückfläche 34 und dem freien Rand der Umfangswand 44 andererseits beträgt etwa 1 zu 1,8.

Zum Zusammenbau wird das Filterelement 18 mit seinem Filterbalg 54 voran axial in den Gehäusetopf 22 gesteckt. Dabei wird die Dichtung 28 auf die äußere Andrückfläche 34 aufgelegt. Anschließend wird die Gehäusehaube 24 in axialer Richtung so auf den Gehäusetopf 22 gesetzt, dass die Umfangswand 44 auf dem Begrenzungsabschnitt 36 nahezu aufsitzt. Dabei wird die Umfangswand 44 der Gehäusehaube 24 entlang der Zentrierabschnitte 40 geführt und so in die korrekte Position auf dem Gehäusetopf 22 gebracht. Das Filterelement 18 wird außerdem im Gehäusetopf 22 zentriert. In der Endposition wird der Dichtbereich 62 der Dichtung 28 in axialer Richtung zwischen dem äußeren Andrückabschnitt 32 und dem Dichtungsabschnitt 42 eingeklemmt. Außerdem wird der radiale Befestigungsabschnitt 58 der Dichtung 28 mit dem inneren Andrückabschnitt 48 in axialer Richtung in den Aufnahmeraum 30 gedrückt. Durch den querschnittserweiterten Befestigungsbereich 56 wird verhindert, dass die Dichtung 28 beispielsweise bei betriebsbedingten Druckpulsationen durch die Lücke 123 zwischen dem inneren Andrückabschnitt 48 und dem äußeren Andrückabschnitt 32 aus der Dichtungskammer 26 herausrutschen kann.

## Patentansprüche

1. Filterelement (18) für eine Filtervorrichtung (10) für Fluid, insbesondere Luft, Gas, Kraftstoff, Öl, Wasser, Harnstoffwasserlösung oder dergleichen, insbesondere einer Brennkraftmaschine, insbesondere eines Kraftfahrzeugs, welches austauschbar in einem Filtergehäuse (12) zwischen wenigstens einem Einlass (14) und wenigstens einem Auslass (16) für Fluid angeordnet werden kann, wobei das Filterelement (18) wenigstens einen Filterbalg (54) aufweist, mit wenigstens einem Filtermedium und wenigstens einer Dichtung (28), welche bezüglich einer Achse (20) des Filterelements (18) umfangsmäßig an einem stirnseitigen Rand (52) des Filterbalgs (54) angeordnet ist, wobei die wenigstens eine Dichtung (28) einen umfangsmäßigen Befestigungsbereich (56) mit einem sich von radial außen nach radial innen erstreckenden radialen Befestigungsabschnitt (58) und einem sich wenigstens mit einer Richtungskomponente parallel zur Achse (20) erstreckenden axialen Befestigungsabschnitt (60) und einen umfangsmäßigen Dichtungsbereich (62) aufweist, wobei der Befestigungsbereich (56) mit dem radialen Befestigungsabschnitt (58) und dem axialen Befestigungsabschnitt (60) den Rand (52) des Filterbalgs (54) umgreift, wobei eine dem Filterbalg (54) abgewandte Rückseite des radialen Befestigungsabschnitts (58) eine Haltefläche (59) für einen bezüglich der Achse (20) radial inneren gehäuseseitigen Andrückabschnitt (48) bildet, wobei eine dem Filterbalg (54) abgewandte Rückseite des axialen Befestigungsabschnitts (60) eine radial innere Begrenzung einer wenigstens teilweise umfangsmäßigen Nut (64) im Dichtungsbereich (62) zur Aufnahme eines radial äußeren gehäuseseitigen Andrückabschnitts (32) bildet, wobei die Nut (64) auf der dem axialen Befestigungsabschnitt (60) von radial innen nach radial außen betrachtet gegenüberliegenden radial äußeren Umfangsseite von einem umfangsmäßigen Dichtungsvorsprung (66) begrenzt ist, welcher den axialen Befestigungsabschnitt (60) in axialer Richtung betrachtet überragt, wobei auf der der Nut (64) axial gegenüberliegenden Außenseite des Dichtungsbereichs (62) bezüglich der Achse (20) eine wenigstens in axialer Richtung wirkende umfangsmäßige Dichtungsfläche (70) angeordnet ist, welche sich in einem größeren axialen Abstand zu der Stirnseite (72) des Filterbalgs (54) befindet als die Haltefläche (59) des radialen Befestigungsabschnitts (58), wobei ein axialer Abstand (74) zwischen einem Grund der Nut (64) und der Dichtungsfläche (70) größer ist als ein Abstand (124) zwischen einem Übergang des Grundes der Nut (64) zu dem axialen Befestigungsabschnitt (60) und einem Übergang der Haltefläche (59) zu dem Dichtungsbereich (62), **dadurch gekennzeichnet, dass** ein axialer Abstand (78) zwischen der Haltefläche (59) und der Dichtungsfläche (70) größer ist als eine axiale Dicke (80) des radialen Befestigungsabschnitts (58).

2. Filterelement nach Anspruch 1, **dadurch gekennzeichnet, dass** ein Verhältnis zwischen einer axialen Länge (82) des axialen Befestigungsabschnitts (60) und einem axialen Abstand (84) zwischen dem Rand (52) des Filterbalgs (54) und der Dichtungsfläche (70) zwischen etwa 1 zu 1,2 und 1 zu 1,7, insbesondere etwa 1 zu 1,5 beträgt.

3. Filterelement nach einem der vorigen Ansprüche, **dadurch gekennzeichnet, dass** ein axialer Abstand (86) zwischen dem Rand (52) des Filterbalgs (54) und dem Grund der Nut (64) kleiner ist als ein axialer Abstand (84) zwischen dem Rand (52) des Filterbalgs (54) und der Dichtungsfläche (70).

4. Filterelement nach einem der vorigen Ansprüche, **dadurch gekennzeichnet, dass** eine axiale Höhe (88) der Nut (64) auf ihrer radial inneren Umfangsseite kleiner ist als eine Breite (90) der Nut (64) von radial innen nach radial außen betrachtet im Bereich ihres Grundes und/oder ein axialer Abstand (86) zwischen dem Grund der Nut (64) und dem Rand (52) des Filterbalgs (54) und/oder eine Dicke (92) des axialen Befestigungsabschnitts (60) von radial innen nach radial außen betrachtet und/oder eine axiale Dicke (80) des radialen Befestigungsabschnitts (58) und/oder ein axialer Abstand (84) zwischen dem Rand (52) des Filterbalgs (54) und der Dichtungsfläche (70).

5. Filtervorrichtung (10) für Fluid, insbesondere Luft, Gas, Kraftstoff, Öl, Wasser, Harnstoffwasserlösung oder dergleichen, insbesondere einer Brennkraftmaschine, insbesondere eines Kraftfahrzeugs, mit einem Filtergehäuse (12) mit wenigstens einem Einlass (14) für zu filtrierendes Fluid und wenigstens einem Auslass (16) für filtriertes Fluid, und wenigstens einem Filterelement (18) nach einem der vorangehenden Ansprüche, wobei das wenigstens eine Filterelement (18) in dem Filtergehäuse (12) austauschbar so angeordnet ist oder werden kann, dass es den wenigstens einen Einlass (14) von dem wenigstens einen Auslass (16) trennt, wobei das Filtergehäuse (12) wenigstens ein erstes Gehäuseteil (22) und ein zweites Gehäuseteil (24) aufweist, welche zum Öffnen des Filtergehäuses (12) wenigstens teilweise voneinander trennbar sind, und das wenigstens eine erste Gehäuseteil (22) und das wenigstens eine zweite Gehäuseteil (24) eine bezüglich einer Achse (20) des Filtergehäuses (12) umfangsmäßig verlaufende Dichtungskammer (26) zur Aufnahme wenigstens einer Dichtung (28) des wenigstens einen Filterelements (18) begrenzen, wobei das wenigstens eine zweite Gehäuseteil (24) wenigstens eine abschnittsweise parallel zur Achse (20) gerichtete Dichtfläche (46) zur Anlage der wenigstens einen Dichtung (28) und das wenigstens eine erste Gehäuseteil (22) einen der wenigstens einen Dichtfläche (46) axial gegenüberliegenden bezüglich der Achse (20) radial äußeren Andrückabschnitt (32) mit einer radial äußeren Andrückfläche (34) zum Andrücken der wenigstens einen Dichtung (28) gegen die wenigstens eine Dichtfläche (46) aufweist, das wenigstens eine zweite Gehäuseteil (24) wenigstens einen bezüglich der Achse (20) radial inneren Andrückabschnitt (48) mit einer radial inneren Andrückfläche (50) radial innerhalb der wenigstens einen Dichtfläche (46) zum Drücken des wenigstens einen Filterelements (18) in axialer Richtung und bezüglich der Achse (20) radial außerhalb der wenigstens einen Dichtfläche (46) und des radial äußeren Andrückabschnitts (32) eine die Dichtungskammer (26) radial außen begrenzende Umfangswand (44) aufweist, wobei ein axialer Abstand (94) zwischen der radial äußeren Andrückfläche (34) und der wenigstens einen Dichtfläche (46) größer ist als ein Abstand (122) zwischen der radial äußeren Andrückfläche (34) und der radial inneren Andrückfläche (50).

6. Filtervorrichtung nach Anspruch 5, **dadurch gekennzeichnet, dass** wenigstens ein Gehäuseteil (22), insbesondere das wenigstens eine erste Gehäuseteil, eine Mehrzahl an Zentrierabschnitten (40) aufweist, welche bezüglich der Achse (20) umfangsmäßig verteilt angeordnet sind.

7. Filtervorrichtung nach Anspruch 5 oder 6, **dadurch gekennzeichnet, dass** ein axialer Abstand (94) zwischen der äußeren Andrückfläche (34) und der Dichtfläche (46) kleiner ist als ein axialer Abstand (96) zwischen der Dichtfläche (46) und einem freien Rand der Umfangswand (44).

8. Filtervorrichtung nach einem der Ansprüche 5 bis 7, **dadurch gekennzeichnet, dass** ein Verhältnis zwischen einem axialen Abstand (100) zwischen der inneren Andrückfläche (50) und der Dichtfläche (46) einerseits und einem axialen Abstand (102) zwischen der inneren Andrückfläche (50) und der äußeren Andrückfläche (34) andererseits zwischen etwa 1 zu 1 und 1 zu 1,2, insbesondere etwa 1 zu 1,1, beträgt.

9. Filtervorrichtung nach einem der Ansprüche 5 bis 8, **dadurch gekennzeichnet, dass** ein Verhältnis zwischen einem axialen Abstand (102) zwischen der inneren Andrückfläche (50) und der äußeren Andrückfläche (34) einerseits und einem Abstand (104) von radial außen nach radial innen betrachtet zwischen der radial inneren Umfangsseite des äußeren Andrückabschnitts (32) und der radial äußeren Umfangsseite des inneren Andrückabschnitts (48) andererseits zwischen etwa 1 zu 0,7 und 1 zu 0,9, insbesondere etwa 1 zu 0,8, beträgt.

10. Filtervorrichtung nach einem der Ansprüche 5 bis 9, **dadurch gekennzeichnet, dass** ein kleinster Abstand (106) von radial innen nach radial außen betrachtet zwischen einer radial äußeren Umfangsseite des äußeren Andrückabschnitts (32) und einer radial inneren Umfangsseite der Umfangswand (44) und ein Abstand (104) von radial innen nach radial außen betrachtet zwischen einer radial äußeren Umfangsseite des inneren Andrückabschnitts (48) und einer radial inneren Umfangsseite des äußeren Andrückabschnitts (32) etwa gleich groß sind.

11. Filtervorrichtung nach einem der Ansprüche 5 bis 10, **dadurch gekennzeichnet, dass** ein axialer Abstand zwischen wenigstens einem Zentrierabschnitt (40) und der äußeren Andrückfläche (34) kleiner ist als ein axialer Abstand (94) zwischen der äußeren Andrückfläche (34) und der Dichtfläche (46).

## Claims

1. Filter element (18) for a filter apparatus (10) for fluid, in particular air, gas, fuel, oil, water, urea water solution or the like, in particular of an internal combustion engine, in particular of a motor vehicle, which filter element can be disposed replaceably in a filter housing (12) between at least one inlet (14) and at least one outlet (16) for fluid, wherein the filter element (18) features at least one filter bellows (54), with at least one filter medium and at least one seal (28) which is disposed, with respect to an axis (20) of the filter element (18), circumferentially at a frontal edge (52) of the filter bellows (54), wherein the at least one seal (28) features a circumferential attachment area (56) with a radial attachment portion (58) extending from radially outside to radially inside and an axial attachment portion (60) extending at least with one direction component parallel to the axis (20) and a circumferential sealing area (62), wherein the attachment area (56) engages around the edge (52) of the filter bellows (54) with the radial attachment portion (58) and the axial attachment portion (60), wherein a backside of the radial attachment portion (58) facing away from the filter bellows (54) forms a holding surface (59) for a radially inner housing-sided pressing portion (48) with respect to the axis (20), wherein a backside of the axial attachment portion (60) facing away from the filter bellows (54) forms a radially inner limit of an at least partially circumferential groove (64) in the sealing area (62) for receiving a radially outer housing-sided pressing portion (32), wherein the groove (64) is limited on the radially outer circumferential side opposite the axial attachment portion (60) as viewed from radially inward to radially outward by a circumferential sealing projection (66) which projects beyond the axial attachment portion (60) as viewed in the axial direction, wherein a circumferential sealing surface (70) acting at least in the axial direction is disposed on the outer side of the sealing area (62) axially opposite the groove (64) with respect to the axis (20), which sealing surface is located at a greater axial distance from the front face (72) of the filter bellows (54) than the holding surface (59) of the radial attachment portion (58), wherein an axial distance (74) between a bottom of the groove (64) and the sealing area (70) is larger than a distance (124) between a transition of the bottom of the groove (64) with respect to the axial attachment portion (60) and a transition of the holding surface (59) with respect to the sealing area (62), **characterized in that** an axial distance (78) between the holding surface (59) and the sealing surface (70) is larger than an axial thickness (80) of the radial attachment portion (58).

2. Filter element according to claim 1, **characterized in that** a ratio between an axial length (82) of the axial attachment portion (60) and an axial distance (84) between the edge (52) of the filter bellows (54) and the sealing surface (70) is between approximately 1 to 1.2 and 1 to 1.7, in particular approximately 1 to 1.5.

3. Filter element according to one of the preceding claims, **characterized in that** an axial distance (86) between the edge (52) of the filter bellows (54) and the bottom of the groove (64) is smaller than an axial distance (84) between the edge (52) of the filter bellows (54) and the sealing surface (70).

4. Filter element according to one of the preceding claims, **characterized in that** an axial height (88) of the groove (64) on its radially inner circumferential side is smaller than a width (90) of the groove (64) as viewed from radially inward to radially outward in the area of its bottom and/or an axial distance (86) between the bottom of the groove (64) and the edge (52) of the filter bellows (54) and/or a thickness (92) of the axial attachment portion (60) as viewed from radially inward to radially outward and/or an axial thickness (80) of the radial attachment portion (58) and/or an axial distance (84) between the edge (52) of the filter bellows (54) and the sealing surface (70).

5. Filter apparatus (10) for fluid, in particular air, gas, fuel, oil, water, urea water solution or the like, in particular of an internal combustion engine, in particular of a motor vehicle, with a filter housing (12) with at least one inlet (14) for fluid to be filtered and at least one outlet (16) for filtered fluid, and at least one filter element (18) according to one of the preceding claims, wherein the at least one filter element (18) is or can be disposed replaceably in the filter housing (12) in such a way that it separates the at least one inlet (14) from the at least one outlet (16), wherein the filter housing (12) features at least one first housing component (22) and one second housing component (24) which are at least partially separable from each other to allow opening the filter housing (12), and the at least one first housing component (22) and the at least one second housing component (24) delimit a seal chamber (26) extending circumferentially with respect to an axis (20) of the filter housing (12) for receiving at least one seal (28) of the at least one filter element (18), wherein the at least one second housing component (24) features at least one sealing surface (46) directed sectionwise parallel to the axis (20) for abutment of the at least one seal (28) and the at least one first housing component (22) features a radially outward pressing portion (32) axially opposite the at least one sealing surface (46) with respect to the axis (20) with a radially outer pressing surface (34) for pressing the at least one seal (28) against the at least one sealing surface (46), the at least one second housing component (24) features at least one pressing portion (48) radially inward with respect to the axis (20) with a radially inner pressing surface (50) radially inward of the at least one sealing surface (46) for pressing the at least one filter element (18) in the axial direction and, with respect to the axis (20), radially outward of the at least one sealing surface (46) and the radially outer pressing portion (32) features a circumferential wall (44) which delimits the sealing chamber (26) radially outward, wherein an axial distance (94) between the radially outer pressing surface (34) and the at least one sealing surface (46) is larger than a distance (122) between the radially outer pressing surface (34) and the radially inner pressing surface (50).

6. Filter apparatus according to claim 5, **characterized in that** at least one housing component (22), in particular the at least one first housing component, features a plurality of centering portions (40) which are disposed circumferentially with respect to the axis (20).

7. Filter apparatus according to claim 5 or 6, **characterized in that** an axial distance (94) between the outer pressing surface (34) and the sealing surface (46) is smaller than an axial distance (96) between the sealing surface (46) and a free edge of the peripheral wall (44).

8. Filter apparatus according to one of the claims 5 to 7, **characterized in that** a ratio between an axial distance (100) between the inner pressing surface (50) and the sealing surface (46), on the one hand, and an axial distance (102) between the inner pressing surface (50) and the outer pressing surface (34), on the other hand, is between approximately 1 to 1 and 1 to 1.2, in particular approximately 1 to 1.1.

9. Filter apparatus according to one of the claims 5 to 8, **characterized in that** a ratio between an axial distance (102) between the inner pressing surface (50) and the outer pressing surface (34), on the one hand, and a distance (104) as viewed from radially outward to radially inward between the radially inner circumferential side of the outer pressing portion (32) and the radially outer circumferential side of the inner pressing portion (48), on the other hand, is between approximately 1 to 0.7 and 1 to 0.9, in particular approximately 1 to 0.8.

10. Filter apparatus according to one of the claims 5 to 9, **characterized in that** a smallest distance (106) as viewed from radially inward to radially outward between a radially outer circumferential side of the outer pressing portion (32) and a radially inner circumferential side of the peripheral wall (44) and a distance (104) as viewed from radially inward to radially outward between a radially outer circumferential side of the inner pressing portion (48) and a radially inner circumferential side of the outer pressing portion (32) are approximately equal.

11. Filter apparatus according to one of the claims 5 to 10, **characterized in that** an axial distance between at least one centering portion (40) and the outer pressing surface (34) is smaller than an axial distance (94) between the outer pressing surface (34) and the sealing surface (46).

## Revendications

1. Élément filtrant (18) pour un dispositif de filtration (10) pour du fluide, notamment de l'air, du gaz, du carburant, de l'huile, de l'eau, de la solution urée/eau ou un fluide similaire, notamment d'un moteur à combustion interne, notamment d'un véhicule automobile, lequel élément filtrant pouvant être monté de manière échangeable dans un boîtier de filtre (12) entre au moins une entrée (14) et au moins une sortie (16) pour le fluide, l'élément filtrant (18) présentant au moins un soufflet de filtre (54), avec au moins un milieu filtrant et au moins un joint d'étanchéité (28) qui est disposé, par rapport à un axe (20) de l'élément filtrant (18), de manière circonférentielle sur un bord frontal (52) du soufflet de filtre (54), dans lequel le joint d'étanchéité (28), au moins au nombre d'un, présente une zone de fixation circonférentielle (56) avec une section de fixation radiale (58) s'étendant de l'extérieur en sens radial vers l'intérieur en sens radial et une section de fixation axiale (60) s'étendant au moins avec une composante directionnelle de manière parallèle à l'axe (20) et une zone d'étanchéité circonférentielle (62), la zone de fixation (56) entourant le bord (52) du soufflet de filtre (54) avec la section de fixation radiale (58) et la section de fixation axiale (60), une face arrière dirigée à l'opposé du soufflet de filtre (54) de la section de fixation radiale (58) formant une surface de retenue (59) pour une section d'appui côté boîtier radiale interne (48) par rapport à l'axe (20), une face arrière dirigée à l'opposé du soufflet de filtre (54) de la section de fixation axiale (60) formant une limitation radiale interne d'une rainure (64) au moins en partie circonférentielle dans la zone d'étanchéité (62) en tant que logement d'une section d'appui côté boîtier radiale externe (32), la rainure (64) étant limitée, du côté circonférentiel radial externe situé à l'opposé de la section de fixation axiale (60), considérée de la partie radiale interne vers la partie radiale externe, par une saillie d'étanchéité circonférentielle (66) qui dépasse de la section de fixation axiale (60), considérée en sens axial, une surface d'étanchéité (70) circonférentielle agissant au moins en sens axial étant disposée du côté externe opposé en sens axial à la rainure (64) de la zone d'étanchéité (62) par rapport à l'axe (20), laquelle surface d'étanchéité se trouvant à une plus grande distance axiale de la face frontale (72) du soufflet de filtre (54) que la surface de retenue (59) de la section de fixation radiale (58), une distance axiale (74) entre un fond de la rainure (64) et la surface d'étanchéité (70) étant plus grande qu'une distance (124) entre une transition du fond de la rainure (64) par rapport à la section de fixation axiale (60) et une transition de la surface de retenue (59) par rapport à la zone d'étanchéité (62), **caractérisé en ce qu'**une distance axiale (78) entre la surface de retenue (59) et la surface d'étanchéité (70) est plus grande qu'une épaisseur axiale (80) de la section de fixation radiale (58).

2. Élément filtrant selon la revendication 1, **caractérisé en ce qu'**un rapport entre une longueur axiale (82) de la section de fixation axiale (60) et une distance axiale (84) entre le bord (52) du soufflet de filtre (54) et la surface d'étanchéité (70) est d'environ 1 pour 1,2 à 1 pour 1,7, notamment d'environ 1 pour 1,5.

3. Élément filtrant selon l'une des revendications précédentes, **caractérisé en ce qu'**une distance axiale (86) entre le bord (52) du soufflet de filtre (54) et le fond de la rainure (64) est plus petite qu'une distance axiale (84) entre le bord (52) du soufflet de filtre (54) et la surface d'étanchéité (70).

4. Élément filtrant selon l'une des revendications précédentes, **caractérisé en ce qu'**une hauteur axiale (88) de la rainure (64), sur son côté circonférentiel radial interne, est plus petite qu'une largeur (90) de la rainure (64), considérée de la partie radiale interne vers la partie radiale externe, à proximité de son fond et/ou une distance axiale (86) entre le fond de la rainure (64) et le bord (52) du soufflet de filtre (54) et/ou une épaisseur (92) de la section de fixation axiale (60), considérée de la partie radiale interne vers la partie radiale externe, et/ou une épaisseur axiale (80) de la section de fixation radiale (58) et/ou une distance axiale (84) entre le bord (52) du soufflet de filtre (54) et la surface d'étanchéité (70).

5. Dispositif de filtration (10) pour du fluide, notamment de l'air, du gaz, du carburant, de l'huile, de l'eau, de la solution urée/eau ou un fluide similaire, notamment d'un moteur à combustion interne, notamment d'un véhicule automobile, avec un boîtier de filtre (12) avec au moins une entrée (14) pour le fluide à filtrer et au moins une sortie (16) pour le fluide filtré, et avec au moins un élément filtrant (18) selon l'une des revendications précédentes, l'élément filtrant (18), au moins au nombre d'un, étant ou pouvant être disposé de manière échangeable dans le boîtier de filtre (12) de sorte à séparer l'entrée (14), au moins au nombre d'une, de la sortie (16), au moins au nombre d'une, le boîtier de filtre (12) présentant au moins un premier composant de boîtier (22) et un second composant de boîtier (24) qui peuvent être séparés l'un de l'autre, au moins en partie, afin d'ouvrir le boîtier de filtre (12), et le premier composant de boîtier (22), au moins au nombre d'un, et le second composant de boîtier (24), au moins au nombre d'un, limitant une chambre d'étanchéité (26) évoluant en sens circonférentiel par rapport à un axe (20) du boîtier de filtre (12) et destinée à loger au moins un joint d'étanchéité (28) de l'élément filtrant (18), au moins au nombre d'un, le second composant de boîtier (24), au moins au nombre d'un, présentant au moins une surface d'étanchéité (46) qui évolue de manière parallèle, sur certaines sections, à l'axe (20) en vue de la mise en contact du joint d'étanchéité (28), au moins au nombre d'un, et le premier composant de boîtier (22), au moins au nombre d'un, présentant une section d'appui radiale externe (32) située à l'opposé, en sens axial, de la surface d'étanchéité (46) et radialement extérieur par rapport à l'axe (20), laquelle section d'appui étant dotée d'une surface de pression radiale externe (34) en vue de la mise en pression du joint d'étanchéité (28), au moins au nombre d'un, contre la surface d'étanchéité (46), au moins au nombre d'une, le second composant de boîtier (24), au moins au nombre d'un, présentant au moins une section d'appui radiale interne (48), par rapport à l'axe (20), étant dotée d'une surface de pression radiale interne (50) placée en sens radial à l'intérieur de la surface d'étanchéité (46), au moins au nombre d'une, en vue de la mise en pression de l'élément filtrant (18), au moins au nombre d'un, en sens axial, et présentant en sens radial par rapport à l'axe (20), en dehors de la surface d'étanchéité (46), au moins au nombre d'une, et de la section d'appui radiale externe (32), une paroi circonférentielle (44) limitant la chambre d'étanchéité (26) en sens radial externe, une distance axiale (94) entre la surface de pression radiale externe (34) et la surface d'étanchéité (46), au moins au nombre d'une, étant plus grande qu'une distance (122) entre la surface de pression radiale externe (34) et la surface de pression radiale interne (50).

6. Dispositif de filtration selon la revendication 5, **caractérisé en ce qu'**au moins un composant de boîtier (22), notamment le premier composant de boîtier, au moins au nombre d'un, présente plusieurs sections de centrage (40) qui sont réparties de manière circonférentielle par rapport à l'axe (20).

7. Dispositif de filtration selon la revendication 5 ou 6, **caractérisé en ce qu'**une distance axiale (94) entre la surface de pression externe (34) et la surface d'étanchéité (46) est plus petite qu'une distance axiale (96) entre la surface d'étanchéité (46) et un bord libre de la paroi circonférentielle (44).

8. Dispositif de filtration selon l'une des revendications 5 à 7, **caractérisé en ce qu'**un rapport entre une distance axiale (100) entre la surface de pression interne (50) et la surface d'étanchéité (46), d'une part, et une distance axiale (102) entre la surface de pression interne (50) et la surface de pression externe (34), d'autre part, est d'environ 1 pour 1 et 1 pour 1,2, notamment d'environ 1 pour 1,1.

9. Dispositif de filtration selon l'une des revendications 5 à 8, **caractérisé en ce qu'**un rapport entre une distance axiale (102) entre la surface de pression interne (50) et la surface de pression externe (34), d'une part, et une distance (104), considérée de la partie radiale externe vers la partie radiale interne, entre le côté circonférentiel radial interne de la section d'appui externe (32) et le côté circonférentiel radial externe de la section d'appui interne (48), d'autre part, est d'environ 1 pour 0,7 et 1 pour 0,9, notamment d'environ 1 pour 0,8.

10. Dispositif de filtration selon l'une des revendications 5 à 9, **caractérisé en ce qu'**une distance minimale (106), considérée de la partie radiale interne vers la partie radiale externe, entre un côté circonférentiel radial externe de la section d'appui externe (32) et un côté circonférentiel radial interne de la paroi circonférentielle (44), et une distance (104), considérée de la partie radiale interne vers la partie radiale externe, entre un côté circonférentiel radial externe de la section d'appui interne (48) et un côté circonférentiel radial interne de la section d'appui externe (32), sont quasiment identiques.

11. Dispositif de filtration selon l'une des revendications 5 à 10, **caractérisé en ce qu'**une distance axiale entre au moins une section de centrage (40) et la surface de pression externe (34) est plus petite qu'une distance axiale (94) entre la surface de pression externe (34) et la surface d'étanchéité (46).
